# EUROPÄISCHE PATENTSCHRIFT

(11) **EP 2 190 760 B1**
(45) Veröffentlichungstag und Bekanntmachung des Hinweises auf die Patenterteilung: **02.05.2012**
(21) Anmeldenummer: 08772890.3
(22) Anmeldetag: 17.07.2008
(51) Int. Cl.: B65G 21/20, B65G 19/30

(54) **UMLENKVORRICHTUNG FÜR EIN FÖRDERSYSTEM**
DEFLECTION MECHANISM FOR A CONVEYING SYSTEM
DISPOSITIF DÉFLECTEUR POUR UN SYSTÈME DE TRANSPORT

(30) Priorität: 17.09.2007 CH 14482007; 23.04.2008 WO PCT/CH2008/000184
(43) Veröffentlichungstag der Anmeldung: 02.06.2010
(73) Patentinhaber: WRH Walter Reist Holding AG, 8272 Ermatingen (CH)
(72) Erfinder: DE ANGELIS, Marco, CH-8047 Zürich (CH); MÜLLER, Erwin, CH-8635 Dürnten (CH)
(74) Vertreter: Frei Patent Attorneys
(86) Internationale Anmeldenummer: PCT/CH2008/000319
(87) Internationale Veröffentlichungsnummer: WO 2009/036581

(56) Entgegenhaltungen:
- WO-A-99/35063
- DE-A1- 10 135 659
- DE-C1- 3 726 059
- FR-A- 2 196 281

## Beschreibung

Die Erfindung bezieht sich auf das Gebiet der Fördertechnik. Sie bezieht sich insbesondere auf eine Umlenkvorrichtung für ein Fördersystem gemäss dem Oberbegriff des Patentanspruches 1.

### STAND DER TECHNIK

Fördereinrichtungen weisen typischerweise Förderelemente Riemen, Ketten, Seile Bänder, Räder etc. auf, welche im Allgemeinen entlang dreidimensional verlaufenden Bahnen gefördert werden. Dabei werden die Förderelemente durch einen Antrieb gestossen und/oder gezogen. Beim Umfahren von Kurven treten Reibungskräfte auf, welche dem Antrieb entgegenwirken. Zu Reduktion dieser Reibungskräfte ist es beispielsweise aus der WO 99/35063 bekannt, fest montierte Rollen in einem Umlenkbereich anzuordnen. Die Lagerung der Rollen verursacht aber Reibung und Lärm.

Eine andere Umlenkvorrichtung ist beispielsweise aus der DE 101 35 659 A1 bekannt. Darin ist bei einer Fördervorrichtung eine endlose Stützkette vorgesehen, welche eine Seitenbogenkette der Fördervorrichtung in einer Kurve stützt. Dazu sind an der Stützkette vorstehende Tragelemente angebracht, welche gegen die Seitenbogenkette drücken und diese derart stützen. Der Aufbau der gesamten Vorrichtung ist aufwendig.

In der WO 2007/045 105 sind zylindrische Umlenkrollen für ein Seilfördersystem mit zwei parallelen Seilen offenbart. Bei jeder Umlenkung des Seilpaares - egal ob der Umlenkwinkel z.B. 10° oder 180° beträgt - ist ein Umlenkzylinder mit einem entsprechend grossen Durchmesser und damit auch mit einer entsprechenden Massenträgheit erfiorderlich. Eire Vorrichtung gemäss dem oberbegriff des anspruchs 1 ist ans FR-A-2,196,2 B1 oder DE-C-3726059 bekannt.

Die vorbekannten Umlenkvorrichtungen sind auf feste, vorgegebene Umlenkwinkel ausgerichtet. Wird ein anderer Umlenkwinkel erforderlich, muss eine angepasste Umlenkvorrichtung konstruiert und gebaut werden.

### DARSTELLUNG DER ERFINDUNG

Es ist deshalb Aufgabe der Erfindung, eine Umlenkvorrichtung für ein Fördersystem der eingangs genannten Art zu schaffen, welche die oben genannten Nachteile behebt. Insbesondere ist eine Aufgabe, eine reibungsarme Umlenkvorrichtung zu schaffen, die ferner einen einfachen Aufbau aufweist, günstig in der Herstellung und Montage ist, und als kompakte, autonome Baueinheit lieferbar und montierbar ist. Eine weitere Aufgabe ist, eine Umlenkvorrichtung zu schaffen, welche in einfacher Weise an unterschiedliche geometrische Gegebenheiten anpassbar ist.

Diese Aufgabe löst eine Umlenkvorrichtung für ein Fördersystem mit den Merkmalen des Patentanspruches 1.

Die Umlenkvorrichtung für ein Fördersystem weist also einen Zentralkörper mit einem um den Zentralkörper umlaufenden Rollenkörper auf, wobei der Rollenkörper eine Vielzahl von geführt bewegten Rollen aufweist, welche in einer Rollenbahn des Zentralkörpers abrollen, wobei der Zentralkörper in seiner Form verstellbar ist und dadurch ein Umlenkwinkel der Umlenkvorrichtung einstellbar ist.

Es ist dabei möglich, die Umlenkvorrichtung so auszugestalten, dass der Rollenkörper nicht vollständig um den Zentralkörper umläuft, sondern nur entlang eines Abschnittes des Zentralkörpers. Eine solche Umlenkvorrichtung ist somit nur zur Abstützung von Hin- und Herbewegungen geeignet. Dafür ist keine Rückführung des Rollenkörpers um den Zentralkörper herum erforderlich, wodurch sich der Raumbedarf reduziert.

Vorzugsweise ist eine vordere Rollenbahn dazu vorgesehen, dass weitere Körper an ihr über die Rollen abrollen, und ist die vordere Rollenbahn aus einem flexiblen Material gefertigt. Es ist zumindest die vordere Rollenbahn zur Anpassung an einen vorgegebenen Bahnverlauf biegbar und/oder tordierbar, vorzugsweise aber ist der Zentralkörper als Ganzes gemeinsam mit der vorderen Rollenbahn biegbar und/oder tordierbar. Insbesondere ist also auch eine Rücklauf-Rollenbahn, entlang welcher die an der vorderen Rollenbahn abrollenden Rollen zurückgeführt werden, gemeinsam mit der vorderen Rollenbahn biegbar oder tordierbar. Damit ergibt sich ein in drei Dimensionen frei führbarer Verlauf der Umlenkvorrichtung (unter Berücksichtigung von minimalen Biegeradien). Im Gegensatz zu einer starren Umlenkvorrichtung ist beispielsweise eine Verformung der Umlenkvorrichtung um einen Umlenkwinkel von mindestens 5° oder mindestens 10° möglich.

Die vordere Rollenbahn und die Rücklauf-Rollenbahn verlaufen vorzugsweise mit einem im wesentlichen konstanten Abstand zueinander und sind dazu mittels Verbindungselementen miteinander verbunden. Diese Verbindungselemente sind vorzugsweise mittels Verbindungen mit der vorderen Rollenbahn und/oder mit der Rücklauf-Rollenbahn befestigt oder lösbar verbunden. Vorzugsweise ist mindestens ein Teil der Verbindungen zur Verstellung der Form des Zentralkörpers lösbar und zum Fixieren der Form des Zentralkörpers feststellbar.

Die Rücklauf-Rollenbahn kann, wie die vordere Rollenbahn, aus einem flexiblen Material bestehen, und sich entlang des ganzen Zentralkörpers erstrecken. Sie kann aber auch aus separaten Einzelabschnitten bestehen, welche jeweils über die Verbindungselemente mit der vorderen Rollenbahn verbunden sind und bei einem Verformen des Zentralkörpers gegeneinander beweglich sind. Dadurch wird die Beweglichkeit des Zentralkörpers verbessert, und zur Biegung des Zentralkörpers müssen keine Verbindungen gelöst werden. Statt dessen muss aber zur Fixierung der Form des Zentralkörpers dieser mittels Halteelementen am Fördersystem befestigt werden.

In einer weiteren bevorzugten Ausführungsform der Erfindung sind die vordere Rollenbahn und die Rücklauf-Rollenbahn einstückig aneinander aus einem flexiblen Kunststoff geformt. Damit lässt sich der resultierende Körper als endloses Profil formen, von welchem bei Bedarf ein Stück in einer gewünschten Länge abgeschnitten werden kann. Der Körper kann im Bereich der Rücklauf-Rollenbahn zur Verbesserung der Biegbarkeit gerippt oder geschlitzt sein. Herstellungsverfahren für solche Profile sind beispielsweise zur Herstellung von Elektrorohren oder Lüftungsrohren aus Polyäthylen bekannt.

Ungeachtet der genauen Ausführungsform der Rollenbahnen weist die Umlenkvorrichtung vorzugsweise an den zwei Enden des Zentralkörpers jeweils ein Endstück zur Umlenkung des Rollenkörpers von der vorderen Rollenbahn auf die Rückführ-Rollenbahn (oder umgekehrt) auf.

Beim Biegen des Zentralkörpers müssen Längenunterschiede zwischen der vorderen Rollenbahn und der Rücklauf-Rollenbahn ausgeglichen werden, ebenso Längenunterschiede zwischen Zentralkörper und Rollenkörper. Dazu sind entweder die verschiedenen Elemente zum Biegen lösbar und anschliessend wieder feststellbar miteinander verbunden, oder sie sind an einer oder mehreren Stellen gleitend beweglich miteinander verbunden. Es ist also der ganze Zentralkörper, oder nur ein dünner Teil des Zentralkörpers, welcher die Rollenbahn bildet, aus einem flexiblen Material gebildet. Dieses wird in einer bestimmten Winkelkonfiguration eingespannt, und kann gelöst und mit einem anderen Winkel wieder eingespannt werden.

Diese Feststellbarkeit respektive Beweglichkeit kann, je nach Ausführungsform, zwischen den Rollenbahnen und den Verbindungselementen ausgebildet sein, und/oder zwischen den Rollenbahnen und den Endstücken. Zum Längenausgleich des Rollenkörpers bezüglich der vorderen Rollenbahn und/oder der Rücklauf-Rollenbahn ist mindestens eines der Endstücke in Längsrichtung der Rollenbahnen verschiebbar. Die Länge des Rollenkörpers kann alternativ auch durch ein separates Spannelement ausgleichbar sein, beispielsweise durch eine bewegliche Umlenkung im Bereich der Rücklauf-Rollenbahn.

Die Umlenkvorrichtung bildet vorzugsweise eine selbständige Baueinheit, welche als Einheit montierbar, demontierbar und transportierbar ist, und so in flexibler Weise zur Umlenkung oder zur Abstützung bei einer Richtungsänderung eines Fördermittels in einem Fördersystem einbaubar ist. Das Fördermittel ist beispielsweise ein Förderband aus einem Stück oder aus einzelnen aufeinander folgenden Trägerelementen, oder eine Förderkette oder ein Seilförderer etc. Das Fördermittel rollt also über die Rollen am Zentralkörper ab. Der Druck zwischen Fördermittel und Zentralkörper wird durch die abrollenden Rollen übertragen, ohne dass eine Lagerung der Achsen der Rollen wesentlich belastet wird. Diese Lagerung dient lediglich dazu, die Rollen voneinander zu beabstanden und ihr Herausfallen im unbelasteten Zustand zu verhindern.

Indem die Umlenkvorrichtung eine selbständige Baueinheit ist, welche nur gegen das Fördermittel wirkend montiert werden muss, ohne dass zusätzliche Elemente mit dem Fördermittel verzahnt werden müssen, oder einzeln montiert werden müssen, wird es möglich, modulare Fördersysteme schnell und einfach, wie in einem Baukastensystem, einzurichten und zu modifizieren.

Vorzugsweise ist die Umlenkvorrichtung in Leichtbauweise ausgeführt, mit Rollen aus beispielsweise Kunststoff und dem Zentralkörper aus Kunststoff oder Aluminium. Die Rollen können für höhere Belastungen grundsätzlich auch als Vollzylinder oder aus Hülsen aus Aluminium oder aus Stahl(blech) gefertigt sein. Damit wird ein leichtlaufendes System mit geringer Massenträgheit und mit geringen Energieverlusten geschaffen. Da keine nennenswerten Reibkräfte auftreten - Druckkräfte werden durch die Rollen ohne Reibung an einer Achse übertragen - kann die Umlenkvorrichtung ohne Schmiermittel betrieben werden und ist dadurch weniger anfällig auf Verschmutzung.

Die Umlenkvorrichtung kann als Einheit für eine horizontale, vertikale oder schräg im Raum liegende Umlenkung angeordnet werden. In einer bevorzugten Ausführungsform der Erfindung verlaufen die Rollen (entsprechend einem Verlauf des Fördermittels) entlang einer tordierten Bahn. Eine solche Verwindung der Bahn kann in einem geraden oder gekrümmten Bereich der Rollenbahn vorliegen. Es ist dabei auch möglich, das Fördermittel, z.B. eine Kette von starren Förderelementen, zwischen zwei Umlenkvorrichtungen gemäss der Erfindung einzuklemmen und entlang einem in drei Dimensionen im Raum gekrümmten und tordierten Verlauf zu führen.

In einer anderen Verwendung der Umlenkvorrichtung wird sie zum Umlenken von geförderten Gegenständen am Rand einer Fördervorrichtung eingesetzt. In einer bevorzugten Ausführungsform der Erfindung ist die Umlenkvorrichtung dazu auch im Betrieb der Fördervorrrichtung in sich beweglich, und kann durch einen Antrieb verstellt werden, um die Bewegung der geförderten Gegenstände nach Wahl zu lenken.

Die Form der Umlenkvorrichtung wird im Wesentlichen durch die Form des flexiblen Zentralkörpers definiert, und entspricht, wenn die Umlenkvorrichtung einen Bogen bildet, beispielsweise einem gewünschten Umlenkwinkel. Die Umlenkvorrichtung kann auch in kompliziertere Formen gebracht werden: beispielsweise eine S-Kurve oder ein räumlicher Verlauf mit Krümmungen entlang schräg zueinander stehenden Achsen. Der Umlenkwinkel beträgt beispielsweise zwischen 0 Grad bis zu 360 Grad. Entlang dieses Umlenkwinkels, oder, mit anderen Worten, in einem Abrollbereich, wird das Fördermittel durch den Rollenkörper der Umlenkvorrichtung gestützt respektive rollt das Fördermittel am Rollenkörper ab. Vorzugsweise verläuft die Rückführung des Rollenkörpers ausserhalb des Abrollbereiches auf dem kürzesten Wege, oder aber in einer gekrümmten und in etwa zum Abrollbereich parallelen Bahn. Dadurch nimmt die Umlenkvorrichtung im Vergleich zu einer zylindrischen Umlenkvorrichtung wesentlich weniger Platz ein.

In einer bevorzugten Ausführungsform der Erfindung sind die Rollen in einem Rollenband geführt und voneinander beabstandet. Vorzugsweise ist das Rollenband aus einem flexiblen Flachmaterial gefertigt, insbesondere aus einem Gewebeband oder kunststoffdurchsetzten Gewebe. Weitere bevorzugte einsetzbare Ausführungsformen von Rollenbändern sind in der WO 2006/094423 offenbart, insbesondere in den Figuren 8 bis 18 und dem entsprechenden Abschnitten der Beschreibung, deren Inhalt hiermit in seiner Gesamtheit durch Verweis aufgenommen ist. Beispielsweise kann ein Rollenband zwischen den Halterungen der Rollen auch eine vorzugsweise mittige Einschnürung aufweisen, so dass das Rollenband zusammen mit dem Zentralkörper auch um eine Achse senkrecht zur Ebene des Rollenbandes biegbar ist.

Vorzugsweise weist das Rollenband Ausnehmungen mit Lagervorsprüngen auf, und sind die Rollen mit Einbuchtungen in die Lagervorsprünge eingesetzt und so lose durch die Lagervorsprünge gelagert. Die Rollen sind zylindrisch geformt, oder alternativ auch leicht bombiert, also tonneniörmig, wobei die Rollenbahn korrespondierend konkav geformt ist. Dadurch werden axiale Kräfte - bei vertikaler Anordnung der Rollen entspricht dies im Wesentlichen nur dem Gewicht der Rollen - an die Rollenbahn übertragen, ohne dass die Rollen an ihrer Stirnseite mit der Rollenbahn in Berührung kommen und sich reiben.

In einer anderen bevorzugten Ausführungsform der Erfindung verläuft das Rollenband mit seinen beiden äusseren Kanten in einer Bandführungsnut des Zentralkörpers und ist dadurch geführt und am Herausfallen gehindert. Die Bandführungsnut verhindert also das Herausfallen des Rollenkörpers aus dem Zentralkörper. Die Bandführungsnut ist in einem Teil des Zentralkörpers geformt und bildet im Prinzip einen um den Zentralkörper umlaufenden Schlitz. Alternativ kann die Bandführungsnut auch nur im Bereich der vorderen Rollenbahn angeordnet sein, wobei der Rollenkörper im Bereich der Rückführung zum Teil frei, also nicht zwingend in einer Bandführungsnut verläuft. Durch die freiere oder losere Führung im Bereich der Rückführung lassen sich Ungenauigkeiten und Änderungen in der Länge des Rollenkörpers ausgleichen.

In weiteren bevorzugten Ausführungsformen der Erfindung ist der Rollenkörper aus einer Vielzahl von einzelnen, nicht aneinander geketteten Rollen gebildet. Die Rollen sind um den Zentralkörper rollend angeordnet und sind durch Distanzierungskörper voneinander beabstandet. Die Distanzierungskörper sind drehbar auf den Achsen der Rollen gelagert, vorzugsweise an beiden Enden der Rollen, neben einem abrollenden Teil der Rollen, und verhindern, dass die drehenden Rollen einander berühren.

Es sind also auch andere Rollenformen und andere Typen von Rollenbändern oder einzeln im flexiblen Zentralkörper geführte Rollen einsetzbar. Solche Rollen, Rollenbänder und einzeln gelagerte Rollen sind in der Schweizerischen Patentanmeldung 1448/07 mit Anmeldetag 17. September 2007 und weiteren, die Priorität dieser Anmeldung beanspruchenden Anmeldungen beschrieben, welche hiermit durch Rückbezug in die Beschreibung aufgenommen werden.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: Eine Aufsicht auf eine Umlenkvorrichtung an einem Fördersystem;
- Figur 2: eine Ansicht eines Teiles eines Zentralkörpers;
- Figur 3: ein Querschnitt durch den Zentralkörper der Figur 1;
- Figur 4: ein Endstück zum Zentralkörper der Figur 1;
- Figur 5: eine Aufsicht auf einen Abschnitt eines Rollenbandes;
- Figur 6: eine andere Variante eines Zentral körpers;
- Figur 7: eine weitere Variante eines Zentralkörpers;
- Figur 8: ein Endstück zum Zentralkörper der Figur 5;
- Figur 9: eine beispielhafte Bahnführung; und
- Figur 10: eine im Betrieb verstellbare Umlenkvorrichtung.

Die in den Zeichnungen verwendeten Bezugszeichen und deren Bedeutung sind in der Bezugszeichenliste zusammengefasst aufgelistet. Grundsätzlich sind in den Figuren gleiche und funktional gleiche Teile mit gleichen Bezugszeichen versehen.

### WEGE ZUR AUSFÜHRUNG DER ERFINDUNG

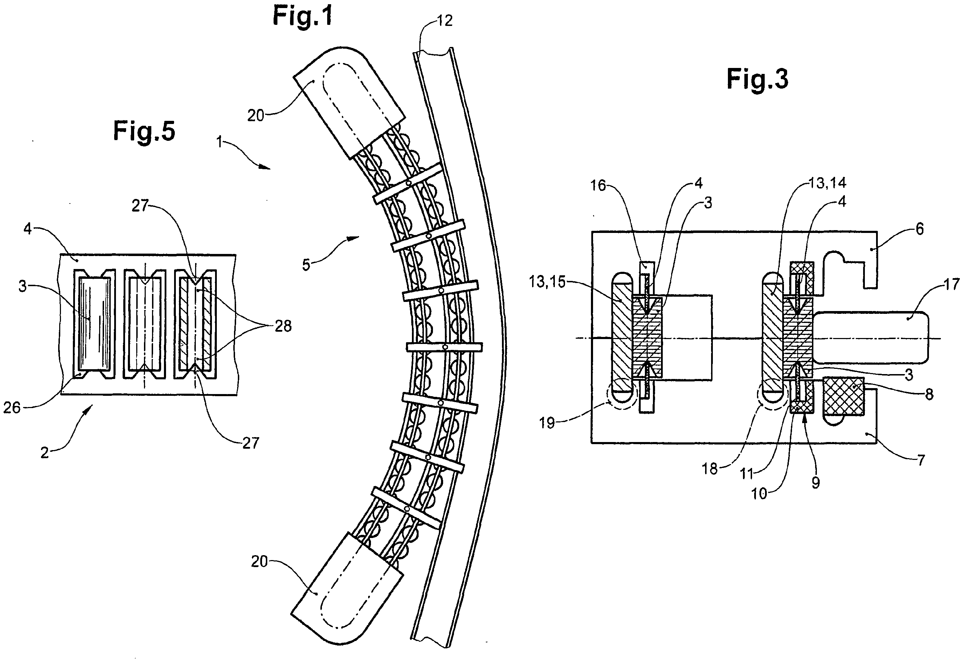

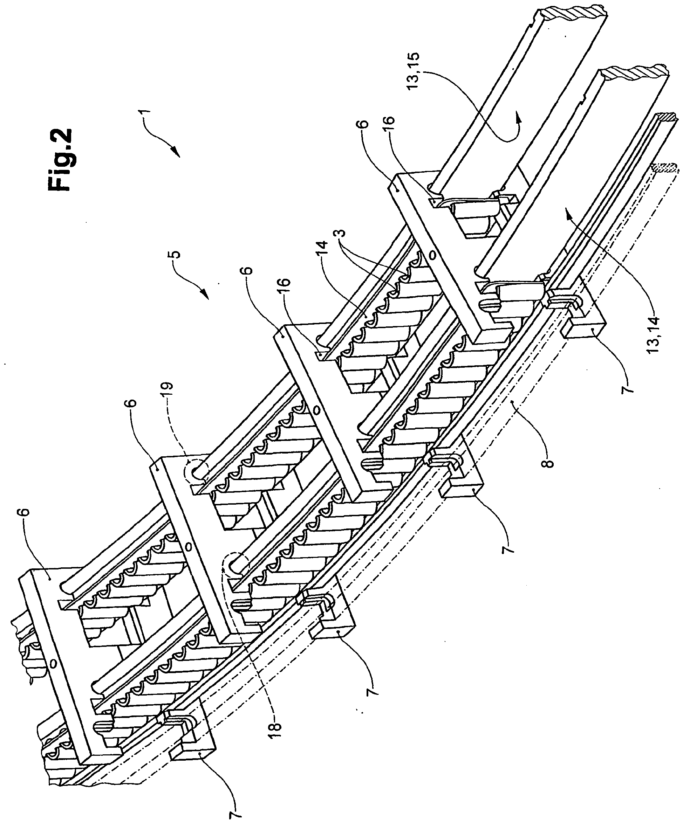

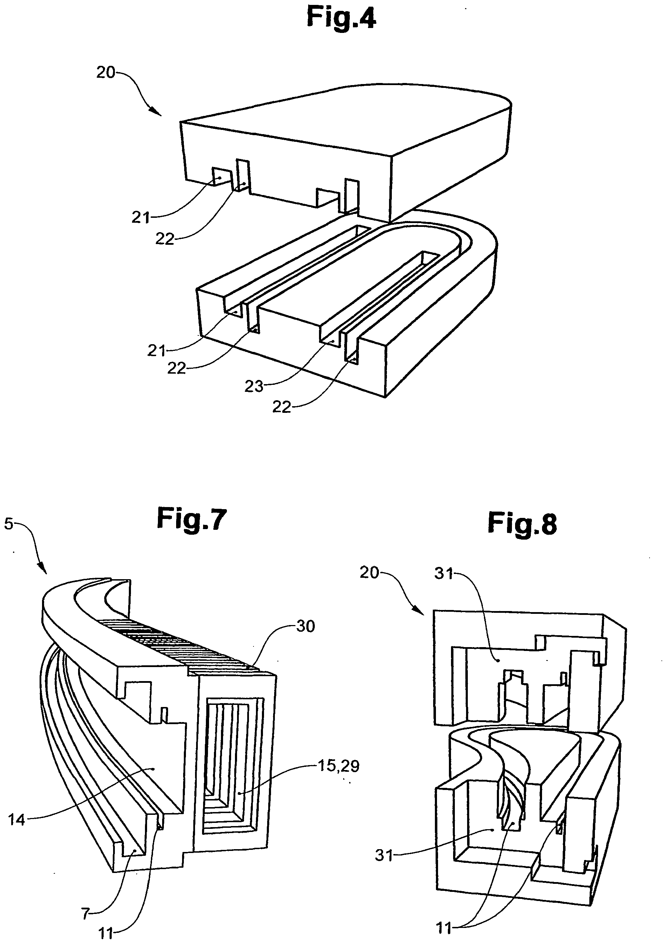

Eine erste bevorzugte Ausführungsform der Erfindung wird anhand der **Figuren 1** bis **4** beschreiben: **Figur 1** zeigt schematisch eine Umlenkvorrichtung 1 mit einem Zentralkörper 5 und zwei Endstücken 20, montiert an einer Halterung 12 eines Förderystemes. **Figur 2** zeigt eine Ansicht eines Teiles eines Zentralkörpers, und **Figur 3** einen entsprechenden Querschnitt. Der Zentralkörper 5 zur Führung eines Rollenkörpers 2 ist mehrteilig aufgebaut und weist auf:
■ eine Rollenbahn 13, welche wiederum eine vordere Rollenbahn 14 und eine Rücklauf-Rollenbahn 15 aufweist. Die beiden Teile der Rollenbahn 13 verlaufen in im wesentlichen gleichbleibendem Abstand zueinander.
■ Verbindungselemente 6, welche die vordere Rollenbahn 14 und die Rücklauf-Rollenbahn 15 stegartig miteinander verbinden. Die Verbindungselemente 6 weisen ferner Halteelemente 7 zur Befestigung des Zentralkörpers 5 respektive der Umlenkvorrichtung 1 an korrespondierend geformten Haltemitteln 8, 12 eines Fördersystems auf, in der **Figur 2** beispielhaft als Haltesteg 8 eingezeichnet.
■ eine aus einem unteren und einem oberen Teil bestehende Bandführung 10 mit jeweils einer darin verlaufenen Bandführungsnut 11. Die Bandführung 10 verläuft in gleichbleibendem Abstand vor der vorderen Rollenbahn 14 und ist in Bandführungsschlitzen 9 der Verbindungselemente 6 gehalten. Zur Führung des Rollenkörpers 2 an der Rücklauf-Rollenbahn 15 kann auch eine eigene Bandführung vorgesehen sein, oder aber, wie hier gezeigt, nur Elemente zur Rücklauf-Bandführung 16, die an den Verbindungselementen 6 ausgestaltet sind.
■ Endstücke 20 zur Umlenkung des Rollenkörpers 2 (siehe dazu **Figur 4**).

Die Teile 6, 10, 14, 15 des Zentralkörpers 5 sind zum Verstellen oder Einstellen eines Umlenkwinkels und/oder einer Torsion (Verwindung) des Zentralkörpers 5 gegeneinander beweglich oder lösbar miteinander verbunden. Einzelne oder alle Teile sind vorzugsweise in einer gewählten gegenseitigen Lage fixierbar, so dass der Zentralkörper 5 die gewählte Form stabil beibehält. In anderen Anwendungen bleibend die Teile gegeneinander beweglich, wobei die Form des Zentralkörpers 5 durch Befestigung an Befestigungsstellen 8, 12 eines Fördersystems bestimmt ist. Beispielsweise sind die Verbindungselemente 6 mittels erster Verbindungen 18 an der vorderen Rollenbahn 14 angebracht, und mittels zweiter Verbindungen 19 an der Rücklauf-Rollenbahn 15. Zum Einstellen eines vorgegebenen Biegeradius werden die ersten Verbindungen 18 und/oder die zweiten Verbindungen 19 gelöst, werden die vordere Rollenbahn 14 und die Rücklauf-Rollenbahn 15 in die gewünschte Biegung gebracht, und werden die Verbindungen 18, 19 wieder fixiert. Gleichzeitig oder anschliessend werden die Bandführungen 10 in die Verbindungselemente 6 eingesetzt. Das Lösen und Fixieren der Verbindungen 18, 19 kann z.B. durch Einklemmen in den Verbindungselementen 6, oder mittels besonderer Klemmelemente oder Schrauben etc. bewerkstelligt werden.

Ein Rollenkörper 2 weist ein Rollenband 4 mit darin gehaltenen Rollen 3 auf. Die Rollen 3 sind im Rollenband 4 geführt und voneinander beabstandet. Die Rollen 3 rollen zumindest an der vorderen Rollenbahn 14 ab und können dabei Lastkräfte von weiteren Körpern 17, die an den Rollen 3 abrollen, aufnehmen und an die vordere Rollenbahn 14 übertragen. Seitliche Bereiche des Rollenbandes 4 verlaufen mit ihren äusseren Kanten in den Bandführungsnuten 11, wodurch die Bewegung des Rollenbandes 4 gerührt, auf eine Bewegung parallel zur vorderen Rollenbahn 14 beschränkt, und am Herausfallen gehindert wird. Anstelle der Bandführungsnuten 11 kann die Bandführung 10 auch lediglich einen vordere Wandabschnitt aufweisen, welcher die Bewegung des Rollenbandes 4 von der jeweiligen Rollenbahn 14, 15 weg verhindert (nebst der Begrenzung der Bewegung in die Richtung quer zum Rollenband). Die Bewegung zur jeweiligen Rollenbahn 14, 15 hin wird ja durch diese selber begrenzt.

Das Rollenband 4 ist vorzugsweise aus einem Gewebe oder einem kunststoffgetränkten Gewebe gefertigt. Es weist beispielsweise Ausnehmungen mit Lagervorsprüngen auf, wobei welche die Rollen 3 mit Einbuchtungen in die Lagervorsprünge eingesetzt sind und so lose durch die Lagervorsprünge gelagert sind. Detaillierte Ausführungsformen von Rollenbändern sind in der eingangs genannten Schweizerischen Patentanmeldung 1448/07 beschrieben.

**Figur 5** zeigt eine Aufsicht auf einen Abschnitt eines Rollenbandes 4, mit teilweise eingesetzten Rollen 3. Das Rollenband 4 weist aufeinander folgende Ausnehmungen 26 auf, wobei jede Ausnehmung 26 bei beiden Seiten des Bandes jeweils einen nach innen weisenden Lagervorsprung 27 aufweist. Die Rollen 3 sind an ihren axialen Enden mit Einbuchtungen 28 versehen (welche wie gezeigt auch durchgehend sein können, so dass die Rollen 3 jeweils Rohre bilden), so dass die Lagervorsprünge 27 des flexiblen Rollenbandes 4 in die Einbuchtungen 28 einschnappen oder eingeführt werden können. Das Rollenband 4 ist einerseits derart flexibel, dass es zum Umfahren des Zentralkörpers 5 gebogen werden kann, und andererseits stabil oder steif genug, dass die Rollen 3 nach dem Einsetzen in die Ausnehmungen 26 durch die Lagervorsprünge 27 gehalten sind. Die Lagervorsprünge 27 nehmen in der Regel nur das Eigengewicht der Rollen 3 auf.

Zur Bildung einer geschlossenen Schlaufe ist das Rollenband 4 vorzugsweise mit seinen beiden Enden gegeneinander gelegt, und sind die beiden Enden mittels mindestens einer auf das Rollenband geklebten Folie miteinander verbunden.

**Figur 4** zeigt ein Endstück zum Zentralkörper der **Figur 2**. Das Endstück 20 ist aus zwei korrespondierend geformten Hälften gebildet, welche jeweils Nuten aufweisen, in welchen die Rollenbahnen 13 und die Bandführungen 10 enden und verschiebbar oder nicht verschiebbar gehalten sind. Eine erste Nut 21 nimmt die Rücklauf-Rollenbahn 15 auf, eine zweite Nut 23 die vordere Rollenbahn 14 und eine dritte Nut 22 die Bandführung 10. Die dritte Nut 22 ist gekrümmt und verläuft zu Umlenkung des Rollenbandes 4 zurück zu einer Stelle vor der ersten Nut 21. Die Teile des Endstückes 20 werden mittels nicht gezeigter Befestigungsmittel miteinander und mit den anderen Teilen des Zentralkörpers 5 verbunden. In einer bevorzugten Ausführungsform der Erfindung ist das Endstück 20 an mindestens einem Ende des Zentralkörpers 5 um eine vorgegebene Distanz bezüglich der anderen Teile verschiebbar. Dadurch können Längenunterschiede zwischen den Rollenbahnen 13 untereinander sowie zum Rollenkörper 2, die beim Biegen des Zentralkörpers 5 entstehen, ausgeglichen werden.

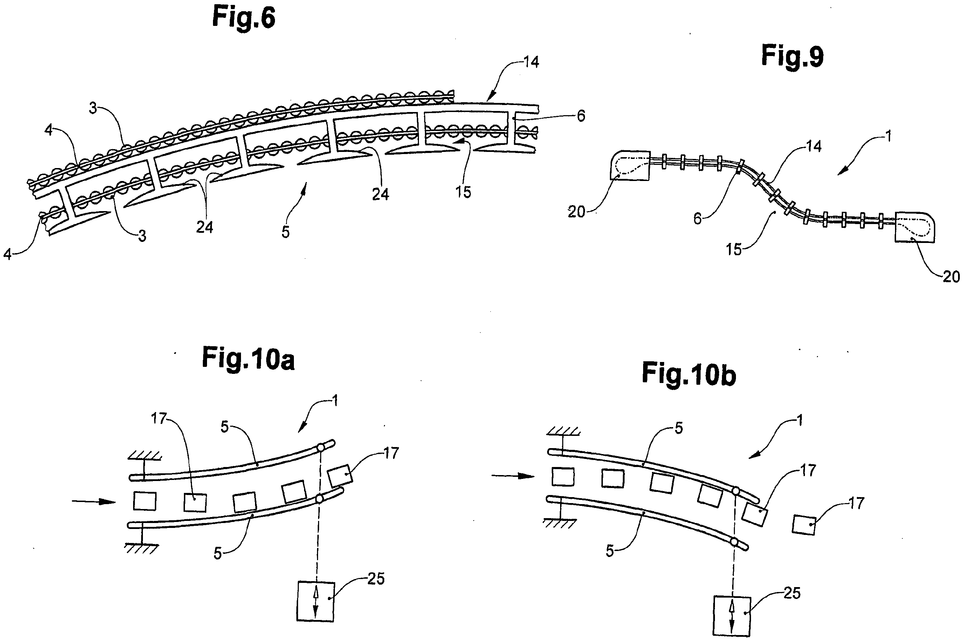

**Figur 6** zeigt eine andere Variante eines Zentralkörpers 5. Dabei besteht die Rücklauf-Rollenbahn 15 nicht aus einer einzigen, durchlaufenden Bahn, sondern aus einzelnen Bahnabschnitten 24. Diese Bahnabschnitte 24 sind nicht aneinander befestigt sondern bleiben zueinander beweglich. Entweder sind sie dazu voneinander beabstandet, wie gezeichnet, oder liegen beweglich aneinander an, beispielsweise mit einem überlappenden oder einem verzahnten Bereich. Jeweils ein Bahnabschnitt 24 ist an einem Verbindungselement 6 fixiert. So kann der Zentralkörper 5 durch Verbiegen oder Verdrehen der vorderen Rollenbahn 14 - innerhalb gewisser Grenzen - in eine gewünschte Form gebracht werden, ohne dass Verbindungen zwischen vorderer Rollenbahn 14 und Rücklauf-Rollenbahn 15 gelöst werden müssen. Dafür ist der Zentralkörper 5 durch andere Mittel in seiner Form zu stabilisieren, beispielsweise durch die Halteelemente 7.

**Figur 7** zeigt eine weitere Variante eines Zentralkörpers 5. Bei diesem bildet der Zentralkörper 5 im Bereich der Rücklauf-Rollenbahn 15 ein Rohr 29, in welchem der Rollenkörper 2 geschützt zurück läuft. Der Rücklauf liegt unmittelbar hinter der vorderen Rollenbahn 14, wodurch sich ein schmaler und platzsparender Aufbau ergibt. Um das Biegen des Zentralkörpers 5 zu erleichtern, ist das Rohr vorzugsweise gerippt, mit Rippen 30.

Die Ausführungsformen der **Figuren 6** und **7** sind vorzugsweise einstückig aus einem flexiblen Kunststoff gefertigt. Halteelemente 7 und Bandführungsnut 11 sind ebenfalls an den einstückigen Zentralkörpern 5 angeformt. So können die Zentralkörper 5 als Endlosware gefertigt werden, bei Bedarf auf eine gewünschte Länge abgeschnitten und mit korrespondierend geformten Endstücken 20 versehen werden.

**Figur 8** zeigt ein Endstück 20 zum Zentralkörper der **Figur 7****.** Die Funktion ist dieselbe wie bei jenem der **Figur 5****,** die Form ist entsprechend der schmalen Form des Zentralkörpers 5 angepasst, damit nicht ein minimaler Biegeradius des Rollenkörpers 2 unterschritten wird. Das Endstück 20 weist zwei Hälften auf, von denen jede eine 31 Aussparung aufweist, in welche der Zentralkörper 5 gemäss der **Figur 7** einsteckbar ist. Vorzugsweise ist der Zentralkörper 5 in seiner Längsrichtung in der Aussparung 31 verschiebbar, um Längenunterschiede auszugleichen. Elemente zum Fixieren des Zentralkörpers 5 am Endstück 20 sind nicht eingezeichnet. Ein gewisser Längenausgleich kann auch durch eine vergleichsweise lose Führung des Rollenkörpers 2 im Rohr 29 bewirkt werden.

**Figur 9** zeigt schematisch eine beispielhafte Bahnführung mit einem S-fömig verlaufenden Zentralkörper 5. Hier sind, ähnlich wie beim Zentralkörper 5 der **Figur 7** und mit einem Endstück 20 analog zu jenem der **Figur 8****,** die beiden Rollenbahnen 14, 15 nahe zueinander angeordnet. Dadurch verbessert sich die Biegbarkeit des Zentralkörpers 5. Natürlich kann auch das Endstück 20 wie in der **Figur 4** ausgeführt sein, wobei die Rollenbahnen 14, 1 S jeweils in einem Bereich, der an die Endstücke 20 anschliesst, aneinander herangefiihrt werden.

**Figur 10** zeigt in einer schematischen Aufsicht eine im Betrieb verstellbare Umlenkvorrichtung. Diese weist zwei in sich bewegliche Zentralkörper 5 gemäss der Erfindung auf. Diese sind oberhalb eines Fördermittels wie beispielsweise eines Förderbandes (nicht eingezeichnet) links und rechts einer Förderbahn angeordnet und durch ein Antriebsmittel 25, hier ein linear verschiebbares Stellorgan, in ihrer Form verstellbar. In einer ersten Stellung **a)** werden ge%rderte weitere Körper 17 nach links geführt, in einer zweiten Stellung **b)** nach rechts. Dabei rollen die weiteren Körper 1'7 an den Rollen 3 der Umlenkvorrichtungen 1 ab. Dadurch ergibt sich eine reibungsarme Umlenkung der geförderten Körper 17.

### BEZUGSZEICHENLISTE

- 1: Umlenkvorrichtung
- 2: Rollenkörper
- 3: Rolle
- 4: Rollenband
- 5: Zentralkörper
- 6: Verbindungselement
- 7: Halteelement
- 8: Haltesteg
- 9: Bandführungsschlitz
- 10: Bandführung
- 11 1: Bandfiihrungsnut
- 12: Halterung
- 13: Rollenbahn
- 14: vordere Rollenbahn
- 15: Rücklauf-Rollenbahn
- 16: Rücklauf Bandfiihrung
- 17: weiterer Körper
- 18: erste Verbindungen
- 19: zweite Verbindungen
- 20: Endstück
- 21 1: erste Nut
- 22: dritte Nut
- 23: zweite Nut
- 24: .Bahnabschnitt
- 25: Antriebsmittel
- 26: Ausnehmung
- 27: Lagervorsprung
- 28: Einbuchtung
- 29: Rohr
- 30: Rippen
- 31 1: Aussparung

## Patentansprüche

1. Umlenkvorrichtung (1) für ein Fördersystem, wobei die Umlenkvorrichtung einen Zentralkörper (5) mit einem um den Zentralkörper (5) umlaufenden Rollenkörper (2) aufweist, wobei der Rollenkörper (2) eine Vielzahl von geführten Rollen (3) aufweist, welche in einer Rollenbahn (13) des Zentralkörpers (5) abrollen, **dadurch gekennzeichnet, dass** der Zentralkörper (5) in sciner Form verstellbar ist und dadurch ein Umlenkwinkel der Umlenkvorrichtung (1) verstellbar ist.

2. Umlenkvorrichtung (1) für ein Fördersystem gemäss Anspruch 1, bei welcher die Rollenbahn (13) aus einem flexiblen Material gebildet ist, und in einer bestimmten Winkelkonfiguration einspannbar, lösbar und mit einem anderen Winkel wieder einspannbar ist.

3. Umlenkvorrichtung (1) für ein Fördersystem gemäss Anspruch 1 oder 2, bei welcher eine vordere Rollenbahn (14) dazu vorgesehen ist, dass weitere Körper (17) an ihr über die Rollen (3) abrollen, und die vordere Rollenbahn (14) aus einem flexiblen Material gefertigt ist.

4. Umlenkvorrichtung (1) für ein Fördersystem gemäss Anspruch 3, bei welcher zumindest die vordere Rollenbahn (14) zur Anpassung an einen vorgegebenen Bahnverlauf biegbar und/oder tordierbar ist.

5. Umlenkvorrichtung (1) für ein Fördersystem gemäss einem der bisherigen Ansprüche, bei welcher der Zentralkörper (5) gemeinsam mit der vorderen Rollenbahn (14) biegbar und/oder tordierbar ist.

6. Umlenkvorrichtung (1) für ein Fördersystem gemäss einem der Ansprüche 3 bis 5, bei welcher die vordere Rollenbahn (14) und eine Rücklauf-Rollenbahn (15), entlang welcher die an der vorderen Rollenbahn (14) abrollenden Rollen (3) zurückgeführt werden, mit einem im wesentlichen konstanten Abstand zueinander verlaufen, und die vordere Rollenbahn (14) und die Rücklauf-Rollenbahn (15) mittels Verbindungsclemnenten (6) miteinander verbunden sind.

7. Umlenkvorrichtung (1) für ein Fördersystem gemäss Anspruch 6, wobei die Verbindungselemente (6) mittels Verbindungen (18, 19) mit der vorderen Rollenbahn (14) und/oder mit der Rücklauf-Rollenbahn (15) lösbar verbunden sind, und diese Verbindungen (18, 19) zur Verstellung der Form des Zentralkörpers (5) lösbar und zum Fixieren der Form des Zentralkörpers (5) feststellbar sind.

8. Umlenkvorrichtung (1) für ein Fördersystem gemäss Anspruch 6 oder 7, wobei die Rollen (3) in einem Rollenband (4) geführt und voneinander beabstandet sind, und die Verbindungselemente (6) eine Bandführung (10) zur Führung des Rollenbandes (4) tragen, wobei vorzugsweise das Rollenband (4) mit seinen beiden äusseren Kanten je in einer Bandführungsnut (11) der Bandführung (10) verläuft und dadurch geführt und am Herausfallen gehindert ist.

9. Umlenkvorrichtung (1) für ein Fördersystem gemäss Anspruch 6, wobei die Rücklauf-Rollenbahn (15) aus separaten Einzelabschnitten (24) besteht, welche über die Verbindungsclemente (6) mit der vorderen Rollenbahn (14) verbunden sind und bei einem Verformen des Zentralkörpers (5) gegeneinander beweglich sind.

10. Umlenkvorrichtung (1) für ein Fördersystem gemäss mindestens einem der Ansprüche, 3 bis 6, wobei die vordere Rollenbahn (14) und die Rücklauf-Rollenbahn (15) einstückig aneinander aus einem flexiblen Kunststoff geformt sind.

11. Umlenkvorrichtung (1) für ein Fürdersystem gemäss einem der bisherigen Ansprüche, aufweisend zwei Endstücke (20) zur Umlenkung des Rollenkörpers (2) an den Enden des Zentralkörpers (5), wobei vorzugsweise mindestens eines der Endstücke (20) zum Längenausgleich bezüglich der vorderen Rollenbahn (14) und/oder der Rücklauf-Rollenbahn (15) in Längsrichtung der Rollenbahnen (13) verschicbbar ist.

12. Umlenkvorrichtung (1) für cin Fördersystem gemäss einem der Ansprüche 1 bis 5, bei welcher der Rollenkörper (2) nicht vollständig um den Zentralkörper (5) umläuft, sondern nur entlang eines Abschnittes des Zentralkörpers (5).

13. Umlenkvorrichtung (1) für ein Fördersystem gemäss einem der bisherigen Ansprüche, aufweisend ein Antriebsmittel (25) zum Verstellen der Form der Umlenkvorrichtung (1) während eines Betriebes der Umlenkvorrichtung (1).

14. Umlenkvorrichtung (1) für ein Fördersystem gemäss einem der bisherigen Ansprüche, wobei die Rollen (3) in einem Rollenband (4) geführt und voneinander beabstandet sind, und das Rollenband (4) aus einem flexiblen Flachmaterial gefertigt ist.

15. Umlenkvorrichtung (1) für ein Fördersystem gemäss Anspruch 14, wobei das Rollenband (4) zur Bildung einer geschlossenen Schlaufe, mit seinen beiden Enden gegeneinander gelegt ist und die beiden Enden mittels mindestens einer auf das Rollenband geklebten Folie miteinander verbunden sind.

## Claims

1. A deflection apparatus (1) for a conveying system, wherein the deflection apparatus comprises a central body (5) with a roller body (2) circulating around the central body (5), wherein the roller body (2) comprises a multitude of guided rollers (3), which roll in a roller track (13) of the central body (5), **characterised in that** the central body (5) is adjustable in its shape and by way of this a deflection angle of the deflection apparatus (1) is adjustable.

2. The deflection apparatus (1) for a conveying system as claimed in claim 1, wherein the roller track (13) is formed from a flexible material, and can be clamped at a certain angular configuration, released and reclamped at a different angle.

3. The deflection apparatus (1) for a conveying system as claimed in claim 1 or 2, wherein a front roller track (14) is provided in order that further bodies (17) roll on it via the rollers (3), and the front roller track (14) is manufactured from a flexible material.

4. The deflection apparatus (1) for a conveying system as claimed in claim 3, wherein at least the front roller track (14) is bendable and/or twistable for adaptation to a predetermined track course.

5. The deflection apparatus (1) for a conveying system as claimed in one of the preceding claims, wherein the central body (5) is bendable and/or twistable jointly with the front roller track (14).

6. The deflection apparatus (1) for a conveying system as claimed in one of claims 3 to 5, wherein the front roller track (14) and a return roller track (15), along which the rollers (3) rolling on the front roller track (14) are led back, run at an essentially constant distance to one another, and the front roller track (14) and the return roller track (15) are connected to each other by means of connecting elements (6).

7. The deflection apparatus (1) for a conveying system as claimed in claim 6, wherein the connecting elements (6) by means of connections (18, 19) are detachably connected to the front roller track (14) and/or to the return roller track (15), and these connections (18, 19) are detachable in order to adjust the shape of the central body (5) and are fixable in order to fix the shape of the central body (5).

8. The deflection apparatus (1) for a conveying system as claimed in claim 6 or 7, wherein the rollers (3) are guided in a roller belt (4) and are distanced to one another, and the connecting elements (6) support a belt guide (10) for guiding the roller belt (4), wherein preferably the roller belt (4) runs with its two outer edges in each case in a belt-guiding groove (11) of the belt guide (10) and is thereby guided and prevented from falling out.

9. The deflection apparatus (1) for a conveying system as claimed in claim 6, wherein the return roller track (15) consists of separate individual sections (24), which are connected via the connecting elements (6) to the front roller track (14) and, upon deformation of the central body (5), are movable to one another.

10. The deflection apparatus (1) for a conveying system as claimed in at least one of claims 3 to 6, wherein the front roller track (14) and the return roller track (15) are formed on one another as one piece from a flexible plastic.

11. The deflection apparatus (1) for a conveying system as claimed in one of the preceding claims, comprising two end pieces (20) for the deflection of the roller body (2) at the ends of the central body (5), wherein preferably at least one of the end pieces (20) for length compensation is displaceable in the longitudinal direction of the roller tracks (13) with respect to the front roller track (14) and/or the return roller track (7.5)_

12. The deflection apparatus (1) for a conveying system as claimed in one of claims 1 to 5, wherein the roller body (2) does not circulate fully around the central body (5), but only along a section of the central body (5).

13. The deflection apparatus (1) for a conveying system as claimed in one of the preceding claims, comprising a drive means (25) for adjusting the shape of the deflection apparatus (1) during operation of the deflection apparatus (1).

14. The deflection apparatus (1) for a conveying system as claimed in one of the preceding claims, wherein the rollers (3) are guided in a roller belt (4) and are distanced to one another, and the roller belt (4) is manufactured of a flexible flat material.

15. The deflection apparatus (1) for a conveying system as claimed in claim 14, wherein, in order to form a closed loop, the roller belt (4) is placed with its two ends one against the other, and the two ends are connected to each other by way of at least a film stuck to the roller belt.

## Revendications

1. Dispositif de déviation (1) pour système de transport, le dispositif de déviation présentant un corps central (5) doté d'un corps de roulement (2) qui tourne autour du corps central (5), le corps de roulement (2) présentant plusieurs galets (3) guidés qui roulent dans une piste de roulement (13) du corps central (5), **caractérisé en ce que**
la forme du corps central. (5) peut être ajustée, ce qui permet d'ajuster l'angle de déviation du dispositif de déviation (7.) .

2. Dispositif de déviation (1) pour système de transport selon la revendication 1, dans lequel la piste de roulement (13) est formée d'un matériau flexible et peut être serrée, libérée et resserrée sous un vautre angle dans une configuration angulaire définie.

3. Dispositif de déviation (1) pour système de transport selon les revendications 1 ou 2, dans lequel une piste de roulement (14) avant est prévue pour que d'autres corps (17) roulent sur elle par l'intermédiaire de galets (3), la piste de roulement avant (14) étant réalisée en un matériau flexible.

4. Dispositif de déviation (1) pour système de transport selon la revendication 3, dans lequel au moins la piste de roulement avant (14) peut être cintrée et/ou tordue pour l'adapter à la forme prédéterminée d'une piste.

5. Dispositif de déviation (1) pour système de transport selon l'une des revendications précédentes, dans lequel le corps central (5) peut être cintré et/ou tordu en même temps que la piste de roulement avant (14).

6. Dispositif de déviation (1) pour système de transport selon l'une des revendications 3 à 5, dans lequel la piste de roulement avant (14) et une piste de roulement de retour (15) sur laquelle les galets (3) qui roulent sur la piste de roulement avant (14) peuvent être renvoyés s'étendent à une distance mutuelle essentiellement constante et en ce que la piste de roulement avant (14) et la piste de roulement (15) de retour sont reliées l'une à l'autre par des éléments de liaison (6).

7. Dispositif de déviation (1) pour système de transport selon la revendication 6, dans lequel les éléments de liaison (6) sont reliés de manière libérable par des liaisons (18, 19) à la piste de roulement avant (14) et/ou à la piste de roulement de retour (15) et en ce que ces liaisons (18, 19) peuvent être libérées pour ajuster la forme du corps central (5) et fixées pour fixer la forme du corps central (5).

8. Dispositif de déviation (1) pour système de transport 6 ou 7, dans lequel les galets (3) sont guidés et maintenus à distance les uns des autres dans une bande de roulement (4), en ce que les éléments de liaison (6) portent un guide-bande (10) qui guide la bande de roulement (4) et en ce que la bande de roulement (4) s'étend avec ses deux bords extérieurs dans des rainures respectives (11) de guidage du guide-bande (10) et est ainsi guidée et empêchée de tomber.

9. Dispositif de déviation (1) pour système de transport selon la revendication 6, dans lequel la piste de roulement de retour (15) est constituée de sections (24) distinctes et séparées qui sont reliées à la piste de roulement avant (14) par les éléments de liaison (6) et qui peuvent se déplacer l'une par rapport à l'autre lors d'une déformation du corps central (5).

10. Dispositif de déviation (1) pour système de transport selon au moins l'une des revendications 3 à 6, dans lequel la piste de roulement avant (14) et la piste de roulement de retour (15) sont formées d'un seul tenant en une matière synthétique flexible.

11. Dispositif de déviation (1) pour système de transport selon l'une des revendications précédentes, présentant deux pièces d'extrémité (20) qui renvoient le corps de roulement (2) aux extrémités du corps central (5), au moins l'une des pièces d'extrémités (20) pouvant déplacée dans le sens de la longueur de la piste de roulement (13) par rapport à la piste de roulement avant (14) et/ou la piste de roulement de retour (15) en vue d'un ajustement de la longueur.

12. Dispositif de déviation (1) pour système de transport selon l'une des revendications 1 à 5, dans lequel le corps de roulement (2) ne roule pas sur tout le pourtour du corps central (5) mais uniquement le long d'une partie du corps central (5).

13. Dispositif de déviation (1) pour système de transport selon l'une des revendications précédentes, présentant un moyen d'entrainement (25) qui déforme le dispositif de déviation (1) lorsque le dispositif de déviation (1) est en fonctionnement.

14. Dispositif de déviation (1) pour système de transport selon l'une des revendications précédentes, dans lequel les galets (3) sont guidés et maintenus à distance les uns des autres dans une bande de roulement (4), la bande de roulement (4) étant réalisée en un matériau plat flexible.

15. Dispositif de déviation (1) pour système de transport selon la revendication 14, dans lequel les deux extrémités de la bande de roulement (4) sont placées l'une contre l'autre pour former une boucle fermée, les deux extrémités étant reliées l'une à l'autre au moyen d'au moins un film adhésif collé sur la bande de roulement.
